(19) Europäisches Patentamt

European Patent Office

Office européen des brevets

(11) **EP 3 057 221 A1**

(12) **EUROPEAN PATENT APPLICATION**
published in accordance with Art. 153(4) EPC

(43) Date of publication:
**17.08.2016 Bulletin 2016/33**

(51) Int Cl.:
***H02M 7/12*** *(2006.01)*

(21) Application number: **14872433.9**

(22) Date of filing: **18.11.2014**

(86) International application number:
**PCT/JP2014/080409**

(87) International publication number:
**WO 2015/093213 (25.06.2015 Gazette 2015/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.12.2013 JP 2013264306**

(71) Applicant: **Mitsubishi Heavy Industries, Ltd.**
**Tokyo 108-8215 (JP)**

(72) Inventor: **AKITA, Jun**
**Tokyo 108-8215 (JP)**

(74) Representative: **Henkel, Breuer & Partner**
**Patentanwälte**
**Maximiliansplatz 21**
**80333 München (DE)**

(54) **POWER SUPPLY DEVICE AND CONSUMED POWER ESTIMATION METHOD**

(57) The purpose of the present invention is to easily and accurately estimate the power consumed by a load, without detecting the input voltage from an AC power supply. A control circuit (20), in accordance with an input current, determines whether a drive pulse for opening and closing a switching member (16) is to be on or off, doing so in such a way that when the input voltage from the AC power supply (11) is constant, the DC voltage supplied to the load at a prescribed input current is constant. Then, on the basis of the input current and the DC voltage, the control circuit (20) estimates the input voltage, and calculates the power consumed by the load (15) from the input voltage, the input current, and the power factor.

FIG. 1

**Description**

Technical Field

The present invention relates to a power supply device and a consumed power estimation method.

Background Art

In recent years, PAM (pulse amplitude modulation) control is being carried out to control motors used in air conditioning devices and the like.

In PAM control, pulses are outputted in accordance with the frequency of AC power in order to reduce harmonic components in current inputted to the motor.

Patent Document 1 discloses a power supply device that improves a power factor and further reduces harmonic current by generating two or more PAM pulses every half-cycle of the power supply frequency.

Citation List

Patent Literature

Patent Document 1: Japanese Unexamined Patent Application Publication No. 2008-253060A

Summary of Invention

Technical Problem

The power supply device that carries out PAM control as disclosed in Patent Document 1 does not detect an input voltage from an AC power supply (also called a power supply voltage). Accordingly, the input voltage is estimated from a DC voltage, supplied to a load, that has been obtained from a rectifying circuit (a converter). The input current from the AC power supply is detected, and the power consumed by the load is then estimated on the basis of the detected input current and the estimated input voltage.

Here, a pulsewidth is set in accordance with the input current for the purpose of suppressing harmonic current. The DC voltage generally changes in accordance with the pulsewidth, and thus the DC voltage is not necessarily constant with respect to the input current, resulting in variations in the DC voltage. If, despite this, the input voltage is estimated from the DC voltage, there are cases where the power consumption cannot be estimated accurately.

Having been achieved in light of such circumstances, it is an object of the present invention to provide a power supply device and a consumed power estimation method capable of easily and accurately estimating power consumed by a load, without detecting an input voltage from an AC power supply.

Solution to Problem

In order to solve the above-described problem, the power supply device and the consumed power estimation method according to the present invention employ the following means.

A power supply device according to a first aspect of the present invention includes: rectifying means converting AC power inputted from an AC power supply into DC power and supplying the DC power to a load; an inductive element connected in series between an input terminal of the AC power supply and the rectifying means; switch means, connected in parallel in a path that supplies an AC voltage to the rectifying means through the inductive element, performing opening/closing operations; smoothing means connected to a DC terminal side of the rectifying means in parallel with the rectifying means; and control means determining, in accordance with the input current, whether a drive pulse that opens and closes the switch means is to be on or off so that the DC voltage supplied to the load is constant at a predetermined input current in the case where an input voltage from the AC power supply is constant. Here, the input voltage from the AC power supply is estimated on the basis of the input current and the DC voltage, and power consumed by the load is calculated from the input voltage, the input current, and a power factor.

According to this configurations, the AC power inputted from the AC power supply is converted into DC power by the rectifying means and supplied to the load. Furthermore, the inductive element is connected in series between the input terminal of the AC power supply and the rectifying means, the switch means that performs opening and closing operations is connected in parallel in a path that supplies an AC voltage to the rectifying means through the inductive element, and the smoothing means is connected to the DC terminal side of the rectifying means in parallel with the rectifying means.

According to this configuration, the DC voltage supplied to the load at a predetermined input current is constant in the case where the input voltage from the AC power supply is constant. Whether a drive pulse that opens and closes the switch means is to be on or off is determined by the control means in accordance with the input current so that the DC voltage is constant.

The input voltage from the AC power supply is then estimated on the basis of the input current and the DC voltage. As described above, control is carried out so that the DC voltage supplied to the load at the predetermined input current is constant in the case where the input voltage is constant. Carrying out such control makes it possible to estimate the input voltage on the basis of the input current and the DC voltage. The power consumed by the load is then calculated from the estimated input voltage, the input current, and the power factor. The power factor is expressed as a polynomial expression of the input current, and a relationship between the power factor and the input current is found in advance.

As such, according to this configuration, the power consumed by a load can be easily and accurately estimated without detecting the input voltage from the AC power supply.

A consumed power estimation method according to a second aspect of the present invention is a consumed power estimation method for a power supply device, the power supply device including: rectifying means converting AC power inputted from an AC power supply into DC power and supplying the DC power to a load; an inductive element connected in series between an input terminal of the AC power supply and the rectifying means; switch means, connected in parallel in a path that supplies an AC voltage to the rectifying means through the inductive element, performing opening/closing operations; and smoothing means connected to a DC terminal side of the rectifying means in parallel with the rectifying means. The method includes the steps of: determining, in accordance with the input current, whether a drive pulse that opens and closes the switch means is to be on or off so that the DC voltage supplied to the load is constant at a predetermined input current in the case where an input voltage from the AC power supply is constant; and estimating the input voltage from the AC power supply on the basis of the input current and the DC voltage, and calculating power consumed by the load from the input voltage, the input current, and a power factor.

Advantageous Effects of Invention

The present invention provides an advantageous effect of enabling the easy and accurate estimation of the power consumed by a load, without detecting the input voltage from an AC power supply.

Brief Description of Drawings

FIG. 1 is a schematic diagram illustrating a power supply device according to an embodiment of the present invention.
FIGS. 2A to 2C illustrate various waveforms according to an embodiment of the present invention, where FIG. 2A illustrates a waveform of a power supply voltage from an AC power supply, FIG. 2B illustrates a waveform of a drive pulse signal generated by a control circuit, and FIG. 2C illustrates changes in an input current.
FIG. 3 is a diagram illustrating a drive pulse signal generating method according to an embodiment of the present invention.
FIG. 4 is a flowchart illustrating the flow of a power consumption estimation process according to an embodiment of the present invention.

Description of Embodiments

An embodiment of a power supply device and a consumed power estimation method according to the present invention will be described below with reference to the drawings.

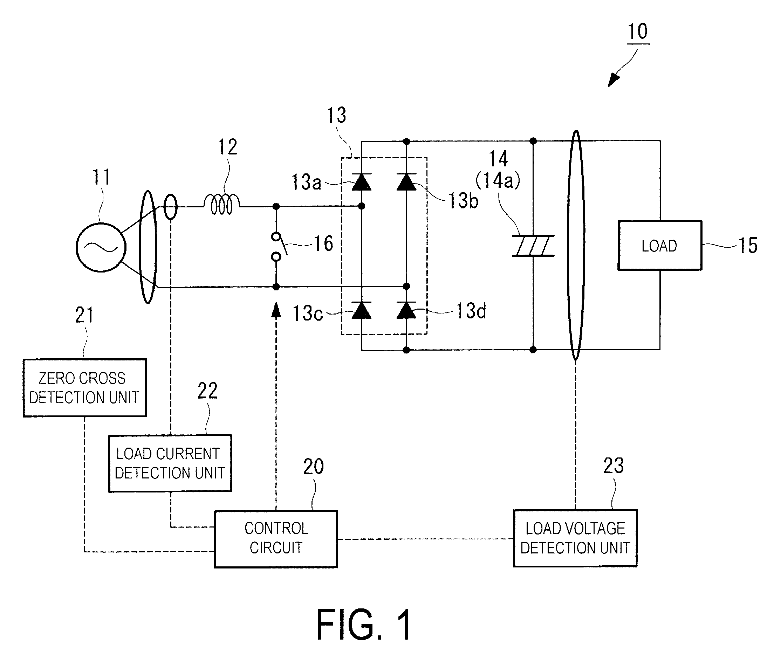

FIG. 1 is a circuit diagram illustrating a power supply device 10 for controlling a compressor in an air conditioner, according to the present embodiment.

As illustrated in FIG. 1, the power supply device 10 includes a reactor 12 connected in series to an AC power supply 11, a rectifying circuit 13 constituted by diode bridges 13a to 13d connected to the AC power supply 11 and the reactor 12, a smoothing circuit 14 constituted by a capacitor 14a connected in parallel to the rectifying circuit 13, and a load 15 connected to the smoothing circuit 14. The load 15 is a motor that drives the compressor of an air conditioner, for example.

The power supply device 10 further includes a switching member 16 that shorts the AC power supply 11 through the reactor 12, and a control circuit 20 constituted of a microcomputer or the like that controls the connection/disconnection of the switching member 16.

The power supply device 10 includes a zero cross detection unit 21 that detects a zero cross point of the AC power supply 11 by detecting a voltage of the AC power supply 11 at both ends of the AC power supply 11, a load current detection unit 22 that detects a current supplied to the load 15 (also called an input current) on an upstream side of the reactor 12, and a load voltage detection unit 23 that detects a DC voltage supplied to the load 15 on an upstream side of the load 15.

The control circuit 20 controls the connection/disconnection of the switching member 16 in synchronization with changes (sine wave) in the power supply voltage (also called an input voltage) of the AC power supply 11, on the basis of detection results from the zero cross detection unit 21, the load current detection unit 22, and the load voltage detection unit 23. The control circuit 20 generates a drive signal that drives (opens and closes) the switching member 16 in synchronization with the zero cross point detected by the zero cross detection unit 21, and connects/disconnects the switching member 16 by transmitting the drive signal to a drive circuit (not illustrated) of the switching member 16.

The control circuit 20 is constituted by, for example, a central processing unit (CPU), a random access memory (RAM), a read-only memory (ROM), a computer-readable storage medium, and the like. Also, a sequence of processing for realizing various functions is, for example, stored in the storage medium or the like in the form of a program, and the various functions are realized by the CPU reading out this program to the RAM or the like and executing information processing/calculation processing. Note that the program may be have various forms, such as being installed in the ROM or another storage medium in advance, provided having been stored in a computer-readable storage medium, or distributed through a wired or wireless communication means. The computer-readable storage medium is a magnetic disk, a magneto-optical disk, a CD-ROM, a DVD-ROM, a semiconductor memory, or the like.

Operations of the power supply device 10 will be described next.

The power supply device 10 according to the present embodiment carries out simple pulse amplitude modulation (PAM) control, which is a type of PAM control. The simple PAM control according to the present embodiment suppresses the generation of harmonic components in the input current by outputting four pulses (pulses P1, P2, P3, and P4, which will be described in detail later) in a half-cycle of a power supply voltage waveform (a power supply frequency).

Upon an on signal being outputted from the control circuit 20 in synchronization with the power supply voltage of the AC power supply 11, the switching member 16 closes, the AC power supply 11 is shorted through the reactor 12, and a current begins to flow, and thus the current gradually increases. Next, upon an off signal being outputted from the control circuit 20 in synchronization with the power supply voltage, the switching member 16 opens, and the short-circuit current that had been flowing in the reactor 12 up until that point becomes a charging current for the capacitor 14a of the smoothing circuit 14 through the rectifying circuit 13, and begins to decrease. Upon the power supply voltage of the AC power supply 11 reaching the vicinity of a peak voltage, the charging current in the capacitor 14a flows through the reactor 12 and the rectifying circuit 13 due to the function of the diode bridges 13a and 13d (or 13b and 13c), in the same manner as the above-described conventional DC power supply device. The voltage across the capacitor 14a that has been charged is then applied to the load 15.

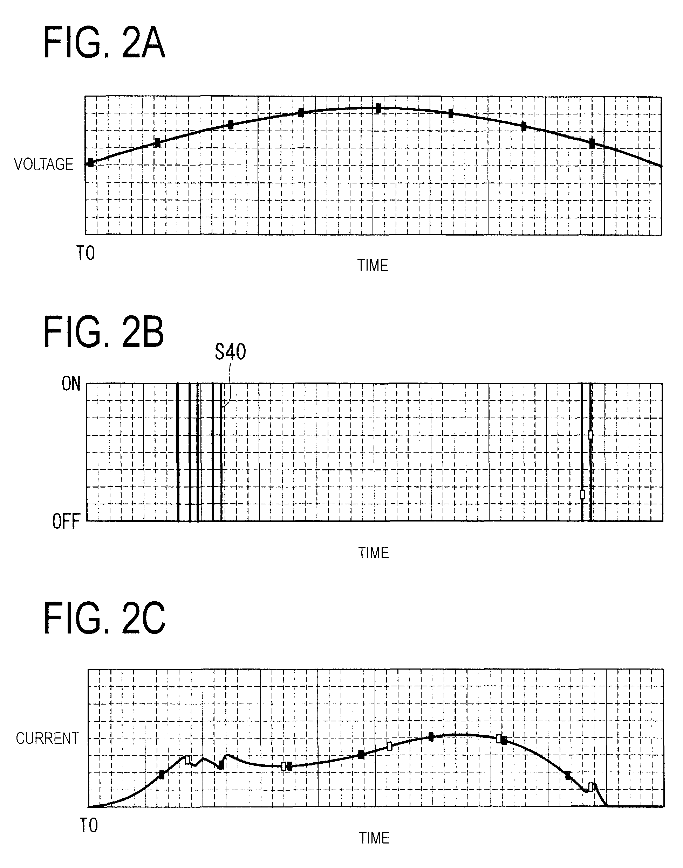

Operating waveforms of various units at this time are illustrated in FIGS. 2A to 2C. FIG. 2A illustrates the half-cycle of the power supply voltage waveform of the AC power supply, FIG. 2B illustrates a waveform of a drive pulse signal generated by the control circuit 20, and FIG. 2C illustrates changes in the input current.

Here, the control circuit 20 generates and outputs the drive pulse signal as illustrated in FIG. 2B, and this will be described in detail below.

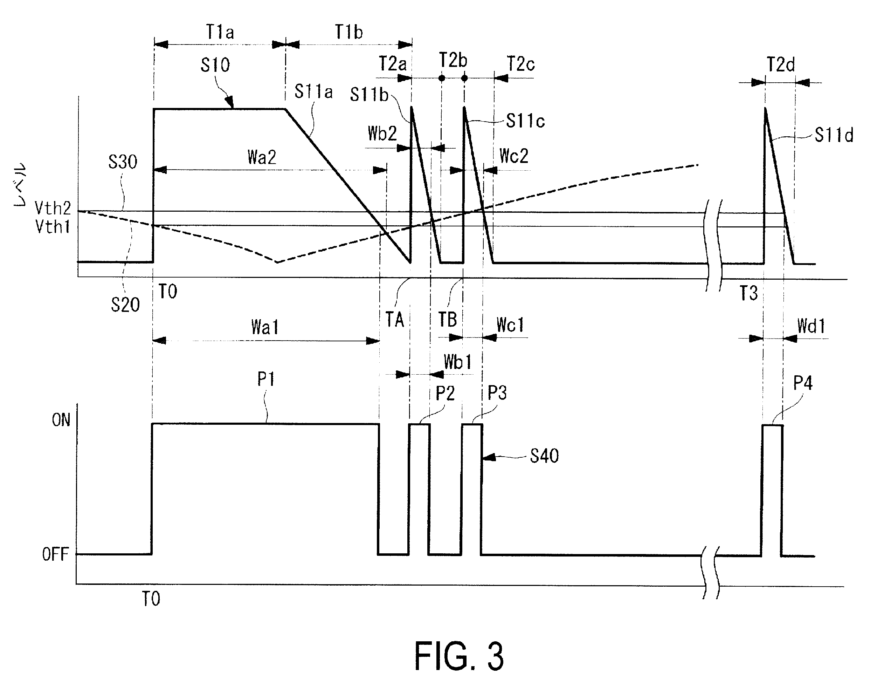

The control circuit 20 generates a reference waveform signal S10, such as that illustrated in FIG. 3, in synchronization with the zero cross point detected by the zero cross detection unit 21. The reference waveform signal S10 includes a trapezoidal wave S11a, a first sawtooth wave (triangular wave) S11b, a second sawtooth wave (triangular wave) S11c, and a third sawtooth wave (triangular wave) S11d.

The trapezoidal wave S11a is generated by the signal turning on upon the zero cross detection unit 21 detecting the zero cross point (this time is taken as a time TO), being delayed by a time width T1a, and then falling over a time width T1b (= T1a).

The first sawtooth wave S11b is generated by the signal turning on at the point when the trapezoidal wave S11a has fallen (= T1a + T1b) and falling over a time width T2a.

The second sawtooth wave S11c is generated by the signal turning on at a point in time delayed by a time width T2b (= T2a) from the point in time when the first sawtooth wave S11b has fallen (= T1a + T1b + T2a) (that is, turning on at a point in time equaling T1a + T1b + T2a + T2b), and then falling over a time width T2c (T2c = T2a in the present embodiment).

The third sawtooth wave S11d is generated by the signal turning on after the second sawtooth wave S11c, at the point in time after a time T3 has passed from the zero cross point, and then falling over a time width T2d (T2d = T2a in the present embodiment).

The control circuit 20 outputs a drive pulse signal S40 by comparing the trapezoidal wave S11a, the first sawtooth wave S11b, the second sawtooth wave S11c, and the third sawtooth wave S11d in the reference waveform signal S10 generated as described above with a first reference level signal S20 and a second reference level signal S30 generated as described hereinafter.

The first reference level signal S20 has a constant level, and a first reference level (reference level) Vth1 of the first reference level signal S20 is calculated through the following formula.

$$Vth1 = \text{trapezoidal wave amplitude} \times M \times \text{Sin}(T1b/T50 \times 360°)$$

Here, M represents a predetermined coefficient indicating a percentage of the trapezoidal wave amplitude (for example, 80% of the trapezoidal wave amplitude), and T50 represents the cycle of the AC power supply, where T50 = 20 ms in the case of an AC power supply having a frequency of 50 Hz.

Meanwhile, the second reference level signal S30 is set to a higher level than the first reference level signal S20, and a second reference level (reference level) Vth2 thereof is calculated through the following formula.

$$Vth2 = \text{sawtooth wave amplitude} \times M \times \text{Sin}((T1b + (T2a + T2b))/T50 \times 360°)$$

Here, the above-described first reference level signal S20 and second reference level signal S30 are set depending on the time widths T1b, T2a, and T2b. Pre-set reference values are employed for the time widths T2a and T2b. The time widths T2a and T2b are preferably set to no less than twice the maximum order for harmonic measurement (for example, 40th order × 50 Hz), and thus an expression T2a = T2b = 1/5 kHz = 200 μs can be made, for example.

A pre-set reference value is used for the time width T1b immediately after the power supply device 10 is started up, after which a time width T1 (= T1a = T1b) associated with a current value is read out from a pre-stored table on the basis of the value of the current supplied to the load 15 as detected by the load current detection unit 22 and used. A time width T3 associated with a current value is read out from the pre-stored table in the same manner for the time T3. Table 1 indicates an example of this table.

[Table 1]

| Input Current [A] | T1 [msec] | | T3 [msec] | |
|---|---|---|---|---|
| | power supply 50 Hz | power supply 60 Hz | power supply 50 Hz | power supply 60 Hz |
| 1.0 | 0.46 | 0.47 | 8.60 | 7.17 |
| 1.5 | 0.50 | 0.51 | 8.60 | 7.17 |
| 2.0 | 0.54 | 0.54 | 8.60 | 7.17 |
| 2.5 | 0.58 | 0.57 | 8.60 | 7.17 |
| 3.0 | 0.62 | 0.61 | 8.60 | 7.17 |
| 3.5 | 0.65 | 0.64 | 8.60 | 7.17 |
| 4.0 | 0.68 | 0.66 | 8.60 | 7.17 |
| 4.5 | 0.70 | 0.68 | 8.60 | 7.17 |
| 5.0 | 0.72 | 0.70 | 8.60 | 7.17 |
| 5.5 | 0.73 | 0.72 | 8.60 | 7.17 |
| 6.0 | 0.75 | 0.74 | 8.60 | 7.17 |
| 6.5 | 0.77 | 0.76 | 8.60 | 7.17 |

The above-described first reference level Vth1 and second reference level Vth2 are calculated using the time width T1 and the time T3 read out from this table.

The control circuit 20 generates the drive pulse signal S40 by comparing the first reference level Vth1 and the second reference level Vth2 calculated as described above with the above-described trapezoidal wave S11a, the first sawtooth wave S11b, the second sawtooth wave S11c, and the third sawtooth wave S11d that constitute the reference waveform signal S10. This determines the pulse turning on/off, according to the following conditions: trapezoidal wave S11a > first reference level Vth1: pulse on trapezoidal wave S11a < first reference level Vth1: pulse off first sawtooth wave S11b > second reference level Vth2: pulse on first sawtooth wave S11b < second reference level Vth2: pulse off second sawtooth wave S11c > second reference level Vth2: pulse on second sawtooth wave S11c < second reference level Vth2: pulse off third sawtooth wave S11d > second reference level Vth2: pulse on third sawtooth wave S11d < second reference level Vth2: pulse off

In other words, as indicated in Table 1, the drive pulse being on or off is determined in accordance with the input current in the simple PAM control according to the present embodiment.

FIGS. 2B and 3 illustrate an example of the drive pulse signal S40 generated in this manner.

Here, a sine wave and a triangular wave (sawtooth wave) are typically compared when generating a pulse signal. However, generating a pulse signal by comparing a triangular wave and a sine wave, which change over time, increases the computational load on processing units (the microcomputer and the like) that constitute the control circuit 20.

Accordingly, as described above, generating the pulse signal by comparing the first reference level Vth1 and second reference level Vth2 with the reference waveform signal S10 makes it possible to lighten the computational burden on the control circuit 20.

However, in this case, error can arise in the pulsewidth of the pulse signal as a result of carrying out the processing using the first reference level Vth1 and the second reference level Vth2. Here, the pulsewidths of a first pulse (long pulse) P1 generated by the trapezoidal wave S11a and the first reference level Vth1, a second pulse (short pulse) P2 generated by the first sawtooth wave S11b and the second reference level Vth2, a third pulse (short pulse) P3 generated by the second sawtooth wave S11c and the second reference level Vth2, and a fourth pulse (short pulse) P4 generated by the third sawtooth wave S11d and the second reference level Vth2 are represented by Wa1, Wb1, Wc1, and Wd1, respectively. Pulsewidths in the case where the trapezoidal wave S11a, the first sawtooth wave S11b, the second sawtooth wave S11c, and the third sawtooth wave S11d are compared with a sine wave X are represented by Wa2, Wb2, Wc2, and Wd2, respectively. In this case, errors in the pulsewidths of the first pulse P1, the second pulse P2, the third pulse P3, and the fourth pulse P4 are (Wa1 - Wa2), (Wb1 - Wb2), (Wc1 - Wc2), and (Wd1 - Wd2), respectively.

In the present embodiment, the control is carried out assuming the second pulse P2, the third pulse P3, and the fourth pulse P4 have the same pulsewidth, and thus as described earlier, the second reference level Vth2 = sawtooth wave amplitude $\times$ M $\times$ Sin((T1b + (T2a + T2b))/T50 $\times$ 360°.

As opposed to this, if, for example, only the second pulse P2 is considered, using Vth2 = sawtooth wave amplitude $\times$ M $\times$ Sin((T1b + T2a))/T50 $\times$ 360° provides improved accuracy. However, in the present embodiment, defining the second reference level Vth2 according to the former formula for carrying out control with the second pulse P2, the third pulse P3, and the fourth pulse P4 having the same pulsewidth (Wb1 = Wc1 = Wd1) makes it possible to reduce the overall error throughout the second pulse P2, the third pulse P3, the fourth pulse P4.

By outputting the drive pulse signal S40 generated in this manner, the current input to the load 15 resembles a sine wave as indicated in FIG. 2C, and thus the control circuit 20 can effectively reduce harmonics.

At this time, the control circuit 20 generates the drive pulse signal S40 by comparing the trapezoidal wave S11a, the first sawtooth wave S11b, the second sawtooth wave S11c, and the third sawtooth wave S11d that constitute the reference waveform signal S10 with the first reference level Vth1 and the second reference level Vth2. In this manner, comparing the reference waveform signal S10 with the first reference level Vth1 and the second reference level Vth2, which are not sine waves but rather have constant levels, makes it possible to lighten the computational burden on the control circuit 20.

Furthermore, the computational burden on the control circuit 20 can be lightened by keeping the number of pulses in the drive pulse signal S40 continually fixed and setting the second pulse P2 to fourth pulse P4 to fixed widths.

In the generated drive pulse signal S40, the second pulse P2 and the third pulse P3 that have a short shorting time are outputted after the first pulse P1 that has a long shorting time in the former half of the half-cycle of the power supply voltage, and the fourth pulse P4 that has a short shorting time is outputted in the latter half. In particular, the fourth pulse P4 in the latter half can contribute to making the waveform of the current inputted to the load 15 resemble a sine wave. The timing of the third sawtooth wave S11d for generating this fourth pulse P4 is controlled by the time T3, which is independent from the other trapezoidal wave S11a, first sawtooth wave S11b, and second sawtooth wave S11c.

Furthermore, the third pulse P3 makes it possible to increase the harmonic reduction effect.

Meanwhile, regulating the spacing between the second pulse P2 and the third pulse P3 not only makes it possible to achieve the maximum harmonic reduction effect, but also enables the option of slightly reducing the harmonic reduction effect but suppressing electromagnetic noise from the reactor caused by the multi-pulse control. (The balance between the harmonic reduction effect and the reactor electromagnetic noise suppression effect can be regulated as necessary by setting the time width T2b.)

As described above, the control circuit 20 generates the drive pulse signal by comparing a predetermined reference waveform signal with a reference level in order to cause the switching member 16 to open and close multiple times in a predetermined cycle. The drive pulse signal has a long pulse in which the switching member 16 is open for a long time, and a short pulse that has a shorter open time than the long pulse. The long pulse is generated by comparing the reference waveform signal with the first reference level. The short pulse is generated by comparing the reference waveform signal with the second reference level, which has a different level from the first reference level.

As such, according to the power supply device 10 of the present embodiment, a harmonic component contained in the input current can be effectively reduced while lightening the burden of computational processes on the control circuit 20.

A process for estimating the power consumed by the load 15 (called a "power consumption estimation process" hereinafter) will be described next.

First, the simple PAM control according to the present embodiment controls the power supply device 10 so that the drive pulse being on or off is determined in accordance with the input current as described above and the DC voltage supplied to the load 15 becomes constant at a predetermined input current in the case where the input voltage is constant.

Specifically, the DC voltage becomes constant by setting the values indicated in Table 2 to be the values calculated through formula (1) or formula (2).

[Table 2]

| Wa1 | Width of Pulse P1 ($\mu$s) |
|---|---|
| Wb1 = Wc1 = Wd1 | Width of Pulse P2, P3, P4 ($\mu$s) |
| TA - Wa1 | Time from P1 to P2 ($\mu$s) |
| TB-(TA+Wbl) | Time from P2 to P3 ($\mu$s) |
| T3 | Time from zero cross to P4 ($\mu$s) |

Formula (1) is a formula for calculating the respective values indicated in Table 2 in the case where the power supply frequency is 50 Hz.

$$Wa1 = 40 \times I + 1130$$
$$Wb1 = 6 \times I + 82$$
$$TA - Wa1 = 10 \times I + 170...(1)$$
$$TB - (TA + Wb1) = 400 - Wb1$$
$$T3 = 100 \times I + 7800$$

As a result, as indicated in Table 3, in the case where the power supply frequency is 50 Hz, a DC voltage VDC is constant at substantially 281 V when the input voltage is 230 V and an input current I is from 5.0 to 8.0 A.

[Table 3]

| Power Supply Frequency 50 Hz: Input Voltage 230 V | |
|---|---|
| Input Current I (A) | DC Voltage VDC (V) |
| 5.0 | 281.9 |
| 5.5 | 281.2 |
| 6.0 | 280.8 |
| 6.5 | 281.2 |
| 7.0 | 281.0 |
| 7.5 | 280.9 |
| 8.0 | 280.6 |

In other words, the input voltage is 230 V in the case where the power supply frequency is 50 Hz, the input current I is from 5.0 to 8.0 A, and the DC voltage VDC is 281 V.

Formula (2) is a formula for calculating the respective values indicated in Table 2 in the case where the power supply frequency is 60 Hz.

$$Wa1 = 50 \times I + 900$$
$$Wb1 = 5 \times I + 82$$
$$TA - Wa1 = 10 \times 5/6 \times I + 113.33...(2)$$
$$TB - (TA + Wb1) = 320 - Wb1$$
$$T3 = 100 \times 5/6 \times I + 6533.33$$

As a result, as indicated in Table 4, in the case where the power supply frequency is 60 Hz, the DC voltage VDC is constant at substantially 282 V when the input voltage is 230 V and the input current I is from 5.0 to 8.0 A.

[Table 4]

| Power Supply Frequency 60 Hz: Input Voltage 230 V | |
|---|---|
| Input Current I (A) | DC Voltage VDC (V) |
| 5.0 | 281.8 |
| 5.5 | 281.7 |
| 6.0 | 281.7 |
| 6.5 | 281.6 |
| 7.0 | 281.6 |
| 7.5 | 281.6 |
| 8.0 | 281.5 |

In other words, the input voltage is 230 V in the case where the power supply frequency is 60 Hz, the input current I is from 5.0 to 8.0 A, and the DC voltage VDC is 282 V.

Note that the results indicating that the DC voltage is constant as indicated in Tables 3 and 4 when the input current is from 5.0 to 8.0 A, obtained by using Formulae (1) and (2), are obtained through simulations. In this manner, the PAM control according to the present embodiment makes it possible to achieve harmonic reduction with respect to the input current and control that sets the DC voltage constant (called "constant voltage control" hereinafter).

The power consumption estimation process according to the present embodiment is executed in the constant voltage control.

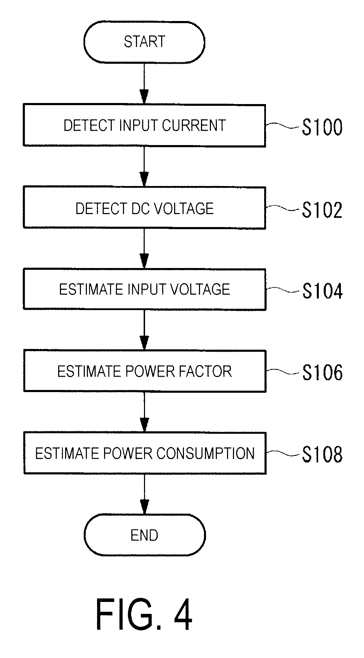

FIG. 4 is a flowchart illustrating the flow of the power consumption estimation process executed by the control circuit 20, and a program used for the power consumption estimation process is stored in advance in the control circuit 20.

First, in step 100, the load current detection unit 22 detects the input current. Note that the input current is assumed to be from 5.0 to 8.0 A, for example.

Next, in step 102, the load voltage detection unit 23 detects the DC voltage.

Next, in step 104, the input voltage is estimated on the basis of the input current and the DC voltage.

As described above, in the case where the power supply frequency is 50 Hz, for example, the power supply device 10 undergoes PAM control such that the DC voltage VDC is 281 V when an input voltage V is 230 V and the input current I is from 5.0 to 8.0 A.

Accordingly, the input voltage V is estimated from the following formula.

$$V = 230 \times VDC/281$$

Next, in step 106, an input power factor $\cos\varphi$ is calculated.

The input power factor $\cos\varphi$ is calculated as a polynomial expression of the input current I. The input power factor $\cos\varphi$ is determined as a polynomial expression of the input current I on the basis of the values of the reactor 12 and the capacitor 14a used in the power supply device 10. Accordingly, a relationship between the input power factor $\cos\varphi$ and the input current I is found in advance by actually driving the control circuit 20, and is stored in the control circuit 20.

Next, in step 108, a power consumption P is estimated from the estimated input voltage V, the input current I, and the input power factor $\cos\varphi$, on the basis of the following formula, after which the power consumption estimation process ends.

$$P = V \times I \times \cos\varphi$$

Note that the values of the estimated power consumption P, the estimated input voltage V, the input current I, the input power factor cosφ, and the like are displayed in a display device connected to the control circuit 20, stored in the storage medium provided in the control circuit 20, or the like.

As described above, the control circuit 20 determines whether the drive pulse for opening and closing the switching member 16 is to be on or off in accordance with the input current, so that in the case where the input voltage from the AC power supply is constant, the DC voltage supplied to the load 15 at a predetermined input current is constant. Then, on the basis of the input current and the DC voltage, the control circuit 20 estimates the input voltage, and calculates the power consumed by the load 15 from the input voltage, the input current, and the power factor.

Accordingly, the power supply device 10 can easily and accurately estimate the power consumed by the load 15, without detecting the input voltage from the AC power supply.

The present invention has been described thus far using the above embodiments; however, the technical scope of the present invention is not limited to the scope described in the above embodiments. Various modifications or improvements can be added to the above embodiments without departing from the essential spirit of the invention, and aspects obtained by adding the modifications or improvements are also included within the technical scope of the present invention. The above embodiments may be combined as appropriate.

For example, although the above embodiments describe the simple PAM control as outputting a pulse four times in a half-cycle of the power supply voltage waveform, the present invention is not limited thereto; the simple PAM control may output a pulse less than four times or five or more times in a half-cycle of the power supply voltage waveform as long as the constant voltage control can be carried out.

Furthermore, although the above embodiments describe estimating the power consumed by the control circuit 20 that controls a motor serving as the load 15, the present invention is not limited thereto, and the power consumed by a control circuit that controls another load may be estimated as well.

Furthermore, the flow of the power consumption estimation process described in the above embodiments is also an example, and unnecessary steps may be removed, new steps may be added, and the processing order may be changed without departing from the essential spirit of the present invention.

Reference Signs List

10    Power supply device
11    AC power supply
12    Reactor
13    Rectifying circuit
14    Smoothing circuit
16    Switching member
20    Control circuit

**Claims**

1. A power supply device comprising:

rectifying means converting AC power inputted from an AC power supply into DC power and supplying the DC power to a load;
an inductive element connected in series between an input terminal of the AC power supply and the rectifying means;
switch means, connected in parallel in a path that supplies an AC voltage to the rectifying means through the inductive element, performing opening/closing operations;
smoothing means connected to a DC terminal side of the rectifying means in parallel with the rectifying means; and
control means determining, in accordance with the input current, whether a drive pulse that opens and closes the switch means is to be on or off so that the DC voltage supplied to the load is constant at a predetermined input current in the case where an input voltage from the AC power supply is constant,

wherein an input voltage from the AC power supply is estimated on the basis of the input current and the DC voltage, and power consumed by the load is calculated from the input voltage, the input current, and a power factor.

2. A consumed power estimation method for a power supply device, the power supply device including:

rectifying means converting AC power inputted from an AC power supply into DC power and supplying the DC power to a load;

an inductive element connected in series between an input terminal of the AC power supply and the rectifying means;

a switch means, connected in parallel in a path that supplies an AC voltage to the rectifying means through the inductive element, performing opening/closing operations; and

smoothing means connected to a DC terminal side of the rectifying means in parallel with the rectifying means, the method comprising the steps of:

determining, in accordance with the input current, whether a drive pulse that opens and closes the switch means is to be on or off so that a DC voltage supplied to the load is constant at a predetermined input current in the case where an input voltage from the AC power supply is constant; and

estimating an input voltage from the AC power supply on the basis of the input current and the DC voltage, and calculating power consumed by the load from the input voltage, the input current, and a power factor.

FIG. 1

# FIG. 2A

VOLTAGE

T0

TIME

# FIG. 2B

S40

ON

OFF

TIME

# FIG. 2C

CURRENT

T0

TIME

FIG. 3

START

DETECT INPUT CURRENT —S100

DETECT DC VOLTAGE —S102

ESTIMATE INPUT VOLTAGE —S104

ESTIMATE POWER FACTOR —S106

ESTIMATE POWER CONSUMPTION —S108

END

FIG. 4

## INTERNATIONAL SEARCH REPORT

| International application No. |
|---|
| PCT/JP2014/080409 |

A. CLASSIFICATION OF SUBJECT MATTER
*H02M7/12*(2006.01)i

According to International Patent Classification (IPC) or to both national classification and IPC

B. FIELDS SEARCHED

Minimum documentation searched (classification system followed by classification symbols)
H02M7/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-304586 A (Mitsubishi Electric Corp.), 02 November 2006 (02.11.2006), paragraphs [0149] to [0167]; fig. 22 to 25 (Family: none) | 1-2 |
| Y | JP 2013-201805 A (Sharp Corp.), 03 October 2013 (03.10.2013), paragraphs [0025] to [0077]; fig. 1 to 5 (Family: none) | 1-2 |
| A | JP 2011-24300 A (Mitsubishi Heavy Industries, Ltd.), 03 February 2011 (03.02.2011), entire text & EP 2456062 A1 & WO 2011/007568 A1 | 1 |

☐ Further documents are listed in the continuation of Box C. ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 25 December 2014 (25.12.14) | Date of mailing of the international search report <br> 13 January 2015 (13.01.15) |
|---|---|
| Name and mailing address of the ISA/ <br> Japan Patent Office | Authorized officer |
| Facsimile No. | Telephone No. |

Form PCT/ISA/210 (second sheet) (July 2009)

**EP 3 057 221 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008253060 A